# EUROPEAN PATENT SPECIFICATION

(11) **EP 3 536 422 B1**
(45) Date of publication and mention of the grant of the patent: **20.10.2021**
(21) Application number: 16920923.6
(22) Date of filing: 07.11.2016
(51) Int. Cl.: B22F 10/25, B22F 10/28, B22F 10/31, B22F 10/37, B22F 10/66, B22F 10/85, B22F 12/84, B22F 12/90, B33Y 10/00, B33Y 30/00, B33Y 40/20, B33Y 50/02, B22F 3/24, B23P 23/04, B29C 64/153, B29C 64/188, B29C 64/393, B33Y 40/10

(54) **DETECTION AND REPAIR METHOD FOR POWDER ADDITIVE MANUFACTURING**
DETEKTIONS- UND REPARATURVERFAHREN ZUR GENERATIVEN FERTIGUNG MIT PULVER
PROCÉDÉ DE DÉTECTION ET DE RÉPARATION DE FABRICATION ADDITIVE AVEC POUDRE

(43) Date of publication of application: 11.09.2019
(73) Proprietor: Tongtai Machine & Tool Co., Ltd., Kaohsiung City 82151 (TW)
(72) Inventor: CHEN, Yihsien, Kaohsiung 82151 (TW); CHEN, HsinPao, Kaohsiung 82151 (TW); YEN, Juihsiung, Kaohsiung 82151 (TW)
(74) Representative: Patentanwälte Olbricht Buchhold Keulertz
(86) International application number: PCT/CN2016/104907
(87) International publication number: WO 2018/082097

(56) References cited:
- WO-A1-2015/109096
- WO-A1-2015/151865
- WO-A1-2016/143137
- CN-A- 104 907 562
- CN-A- 105 522 155
- CN-A- 106 003 726
- CN-A- 106 003 726
- CN-A- 106 041 076
- CN-A- 106 041 076
- US-A1- 2015 177 158

## Description

### FIELD OF THE INVENTION

The present invention relates to an inspecting and repairing method of an additive manufacturing technology.

### BACKGROUND OF THE INVENTION

Laminated object manufacturing, also called additive manufacturing (AM) technology, is provided to capture a plurality of two-dimensional layered contours from a three-dimensional model, and manufacture a workpiece by laminating according to the two-dimensional layered contours.

The current laminated object manufacturing is predominantly based on laser laminate manufacturing technology. A laser melting method is adopted, and a powder layer is spread by a powder spreading mechanism according to the two-dimensional layered contours of the three-dimensional model. The laser beam is focused on the powder layer to melt powders to form the two-dimensional layered contour, and the workpiece is laminated.

During the laminated manufacturing process, the quality of the workpiece will be affected by factors, such as power of the laser, flow field of the gas, and quality of the powders, so that it causes defects of the powder layer. For example, state of spreading powders is incomplete, warped state, raised state, and depressed state. However, equipment of the laser laminate manufacturing technology lacks the mechanism to correct above defects so that the yield rate of the workpiece cannot be increased and the quality of the workpiece cannot be improved. For example, patent document WO 2016143137A1 discloses an apparatus for manufacturing a three-dimensional shaped object is provided with: a shaping section that shapes a three-dimensional shaped object in which a plurality of solidified layers laminated by performing a solidifying process on a material positioned in a region set in accordance with the shape of the three-dimensional shaped object to be shaped, to form a film-like solidified layer, and repeatedly supplying a new material onto the formed solidified layer and performing the solidifying process on the new material to form a new solidified layer; and a checking section that checks the solidified layers already laminated while lamination of the plurality of solidified layers is being performed. Patent document CN106003726A discloses an intelligent laser 3D printing device and method, and belongs to the technical fields of intelligent manufacturing and additive manufacturing. The intelligent laser 3D printing device comprises an outer shell, a semiconductor laser, a computer, a workpiece stage, a drive motor, a galvanometer X, a galvanometer Y, a scanning mirror X, a scanning mirror Y, a field lens, a molten pool and two CCD cameras. Patent document CN106041076A discloses a laser fast forming detection system and method for powder laying evenness and belongs to the technical field of laser fast forming powder laying detection. The laser fast forming detection system and method for powder laying evenness are provided and can monitor whether powder is laid flatly or not in real time and effectively improve the forming quality. Patent document US20150177158A1 discloses an assessment of operational performance of an additive manufacturing apparatus. Particle size images are obtained, in real-time during an additive manufacturing build process in which at least one structure is built by the additive manufacturing apparatus, the obtained images being of an area of a build platform on which the at least one structure is built. However, said patent documents fail to disclose a brightness of the raised area is greater than an average brightness of a layered contour area of the post-fusion image, and a brightness of the depressed area is less than an average brightness of a layered contour area of the post-fusion image.

As a result, it is necessary to provide an inspecting and repairing device of an additive manufacturing technology and a method thereof to solve the problems existing in the conventional technologies as described above.

### SUMMARY OF THE INVENTION

An object of the present disclosure is to provide an inspecting and repairing method of an additive manufacturing technology, which can inspect the post-spreading image and the post-fusion image, determine various types of the defects effectively, and improve the quality of workpiece.

Another object of the present disclosure not forming part of the present invention is to provide an inspecting and repairing device of additive manufacturing technology, which can inspect a powder platform by camera, and repair workpiece by a repairing unit so that the yield rate of workpiece can be increased.

To achieve the above objects, the present disclosure provides an inspecting and repairing method of an additive manufacturing technology for inspecting and repairing a workpiece formed by the additive manufacturing technology as defined in the present claims.

To achieve the above objects, the present disclosure provides an inspecting and repairing device of additive manufacturing technology for inspecting and repairing a workpiece formed by the additive manufacturing technology not forming part of the present invention, which comprises a powder bed unit, a repairing unit, and an inspection unit, wherein the powder bed unit includes a powder platform configured to form the workpiece, a powder spreading mechanism disposed on the powder platform and configured to spread powders on the powder platform, and a laser unit disposed above the powder platform and configured to melt the powders. The repairing unit includes a moving mechanism disposed above the powder platform, and a processing mechanism mounted on the moving mechanism and configured to repair a surface of the workpiece. The inspection unit includes a camera disposed above the powder platform and configured to capture an image of the powder platform, and a controller configured to receive the image, and determine whether the powder spreading mechanism needs to spread the powders, whether a powder spreading defect needs to be overcome, or whether the processing mechanism needs to be driven to repair the surface of the workpiece according to the image.

In one embodiment not forming part of the present invention, the moving mechanism includes a two-dimensional moving platform disposed above the powder platform, and a multi-axis parallel connection machine disposed on the two-dimensional moving platform.

According to the inventive method of claim 1, the processing mechanism includes cutting tools and a laser cladding device, the cutting tools and the laser cladding device are alternatively assembled on the multi-axis parallel connection machine.

In one embodiment not forming part of the present invention, the inspection unit further includes a laser contour sensor assembled on the multi-axis parallel connection machine and configured to sense a contour of the powder platform.

As described above, the post-spreading image and the post-fusion image are captured by the camera. The controller inspects the post-spreading image and the post-fusion image, determines whether any type of defects exists, and identifies various types of defects. For example, state of spreading powders is incomplete, warped state, raised state, and depressed state. Finally, the controller determines whether the powder spreading mechanism needs to spread the powders, whether the powder spreading defect needs to be overcome, or whether the processing mechanism needs to be driven to repair the surface of the workpiece. Thus, the yield rate of the workpiece can be increased, the processing time can be reduced, and the quality of the workpiece can be improved.

### DESCRIPTION OF THE DRAWINGS

Fig. 1 is a perspective view of a preferred embodiment of an inspecting and repairing device of an additive manufacturing technology of the present disclosure.
Fig. 2 is a side view of the preferred embodiment of the inspecting and repairing device of the additive manufacturing technology of the present disclosure.
Fig. 3 is a side view of another preferred embodiment of the inspecting and repairing device of the additive manufacturing technology of the present disclosure.
Fig. 4 is a flow chart of a preferred embodiment of an inspecting and repairing method of an additive manufacturing technology of the present disclosure.
Fig. 5 is a schematic view of image cutting layers in the preferred embodiment of the inspecting and repairing method of the additive manufacturing technology of the present disclosure.
Fig. 6 is a schematic view of a layered area and a layered contour area defined in the preferred embodiment of the inspecting and repairing method of the additive manufacturing technology of the present disclosure.
Fig. 7 is a schematic view of a predetermined processing path in the preferred embodiment of the inspecting and repairing method of the additive manufacturing technology of the present disclosure.
Fig. 8 is a schematic view of a processing area in the preferred embodiment of the inspecting and repairing method of the additive manufacturing technology of the present disclosure.

### DETAILED DESCRIPTION OF THE PREFERRED EMBODIMENTS

The structure and the technical means adopted by the present disclosure to achieve the above and other objects can be best understood by referring to the following detailed description of the preferred embodiments and the accompanying drawings. Furthermore, directional terms described by the present disclosure, such as upper, lower, front, back, left, right, inner, outer, side, longitudinal/vertical, transverse/horizontal, etc., are only directions by referring to the accompanying drawings, and thus the used directional terms are used to describe and understand the present disclosure, but the present disclosure is not limited thereto.

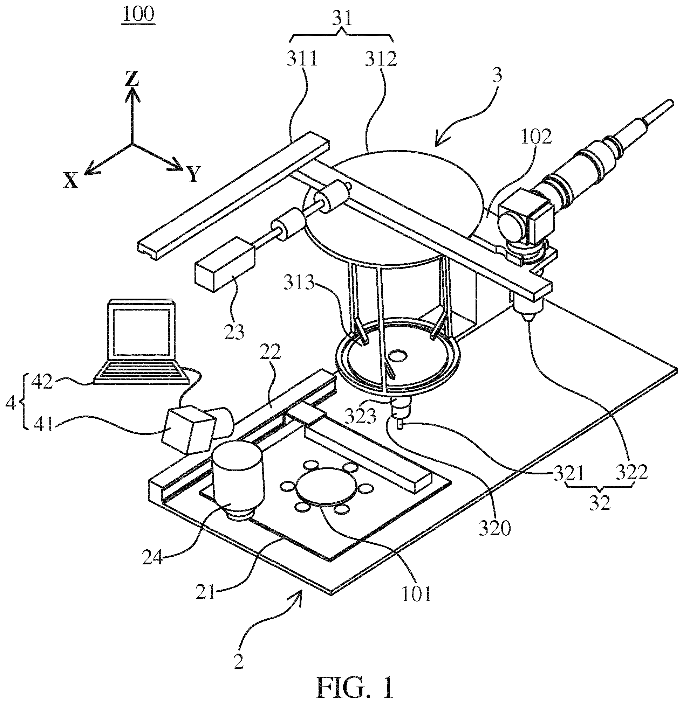

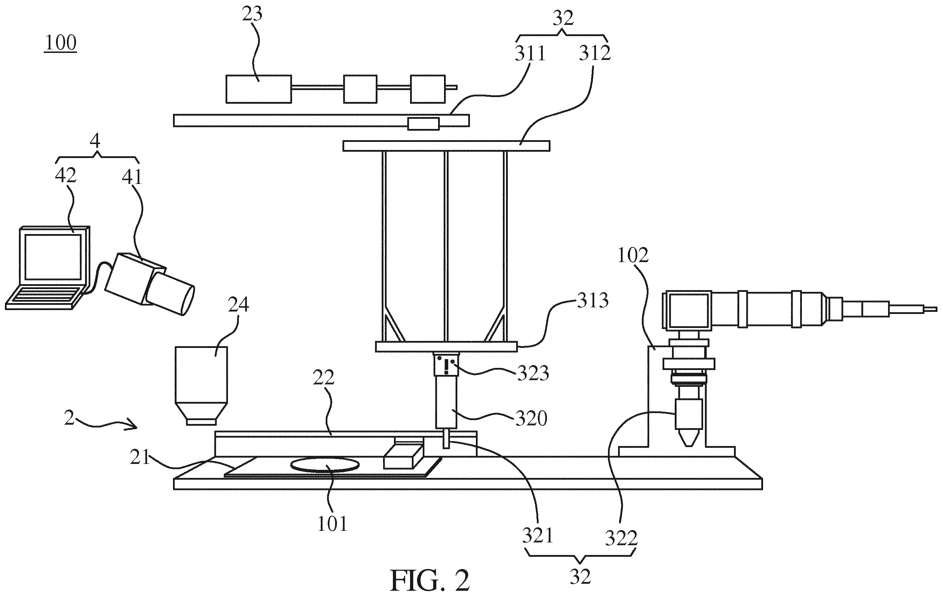

Referring to Figs. 1 and 2, a preferred embodiment of an inspecting and repairing device of an additive manufacturing technology of the present disclosure not forming part of the present invention is provided. The inspecting and repairing device 100 is configured to inspect and repair defects of a workpiece 101 formed by the additive manufacturing technology. For example, a state of spreading powders is incomplete, a workpiece is warped, a melted surface is raised, and a melted surface is depressed, wherein the inspecting and repairing device 100 comprises a powder bed unit 2, a repairing unit 3, and an inspection unit 4. The detailed structure of each component, assembly relationships, and principles of operation in the present disclosure will be described in detail hereinafter.

Referring to Figs. 1 and 2, the powder bed unit 2 includes a powder platform 21, a powder spreading mechanism 22, a laser unit 23, and a powder feeder 24, wherein the powder platform 21 is configured to form the workpiece 101; the powder spreading mechanism 22 is disposed on the powder platform 21 and configured to spread powders on the powder platform 21; the laser unit 23 is disposed above the powder platform 21 and configured to melt the powders for forming the workpiece 101; the power feeder 24 is disposed above the powder platform 21 and configured to store powders and feed powders to the powder spreading mechanism 22 for spreading powders.

Referring to Figs. 1 and 2, the repairing unit 3 includes a moving mechanism 31 and a processing mechanism 32 mounted on the moving mechanism 31 and configured to repair a surface of the workpiece 101, wherein the moving mechanism 31 includes a two-dimensional moving platform 311 and a multi-axis parallel connection machine 312. The two-dimensional moving platform 311 is disposed above the powder platform 21, and the multi-axis parallel connection machine 312 is disposed on the two-dimensional moving platform 311. The multi-axis parallel connection machine 312 can be driven by the two-dimensional moving platform 311 to move along X-axis direction or Y-axis direction. In addition, the processing mechanism 32 includes cutting tools 321 and a laser cladding device 322, wherein the cutting tools 321 are placed in a tool box 102, and mounted on a replacement joint 323 through a spindle 320, wherein the replacement joint 323 is disposed on a bottom of a moving base 313 of the multi-axis parallel connection machine 312. Furthermore, the laser cladding device 322 is also mounted on the replacement joint 323 so that the cutting tools 321 and the laser cladding device 322 are alternatively assembled on the multi-axis parallel connection machine 312. In the embodiment, the multi-axis parallel connection machine 312 is a 3-axis parallel connection machine or a 5-axis parallel connection machine, and is configured to control the moving base 313 to move along a 3-axis direction or a 5-axis direction so that the cutting tools 321 and the laser cladding device 322 can process in any area of the surface of the workpiece 101.

Referring to Figs. 1 and 2, the inspection unit 4 includes a camera 41 and a controller 42, wherein the camera 41 is disposed above the powder platform 21 and configured to capture an image of the powder platform 21; the controller 42 configured to receive the image, and determine whether the powder spreading mechanism 22 needs to spread the powders, whether a powder spreading defect needs to be overcome, or whether the processing mechanism 32 needs to be driven to repair the surface of the workpiece 101 according to the image.

According to the described structure, during the inspection of spreading powders, the powder spreading mechanism 22 is fed powders through the power feeder 24, and the powder spreading mechanism 22 spreads powders on the powder platform 21. The camera 41 captures a post-spreading image of the powder platform 21, and transmits the post-spreading image to the controller 42 to inspect the post-spreading image for obtaining the state of spreading powders on the powder platform 21 and the warped state of the workpiece 101. The controller 42 determines whether the powder spreading mechanism 22 needs to spread the powders, or whether a powder spreading defect needs to be overcome. In addition, during the inspection of fusion, the powders on the powder platform 21 are melted by the laser unit 23 so that the powders are fused on the workpiece 101. The camera 41 captures a post-fusion image of the powder platform 21, and transmits the post-fusion image to the controller 42 to inspect the post-fusion image for obtaining a raised state and a depressed state of the surface of the workpiece 101. The controller 42 determines whether a processing mechanism 32 needs to be driven to repair the surface of the workpiece 101 according to an inspection result of the post-fusion image.

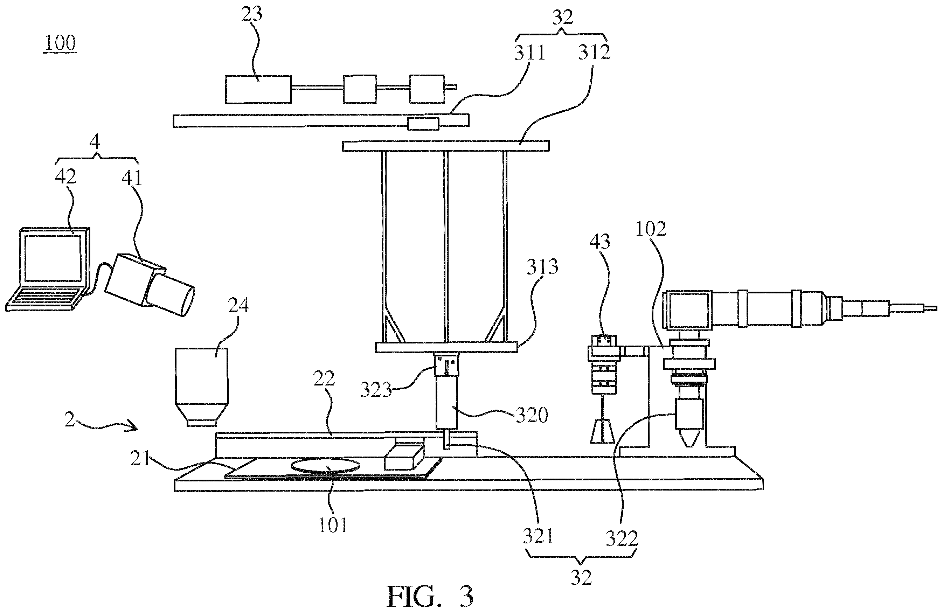

Referring to Fig. 3, another preferred embodiment of the inspecting and repairing device not forming part of the present invention is provided, wherein the inspection unit 4 further includes a laser contour sensor 43, the laser contour sensor 43 is also assembled on the multi-axis parallel connection machine 323 and configured to sense a contour of the powder platform 21, and a raised state and a depressed are inspected according to the contour for determining whether the processing mechanism 32 needs to be driven to repair the surface of the workpiece 101. It should be noted that the inspection unit 4 can solely use the camera 41 to inspect, such as a Charge-coupled Device (CCD), and also can use the camera 41 and the laser contour sensor 43 together to inspect, but it is not limited thereto.

As described above, the post-spreading image and the post-fusion image are captured by the camera 41. The controller 42 inspects the post-spreading image and the post-fusion image, determines whether any type of defects exists, and identifies various types of defects. For example, the state of spreading powders is incomplete, a warped state, raised state, and a depressed state. Finally, the controller 42 determines whether the powder spreading mechanism 22 needs to spread the powders, whether the powder spreading defect needs to be overcome, or whether the processing mechanism 32 needs to be driven to repair the surface of the workpiece 101. Thus, the yield rate of the workpiece 101 can be increased, the processing time can be reduced, and the quality of the workpiece 101 can be improved.

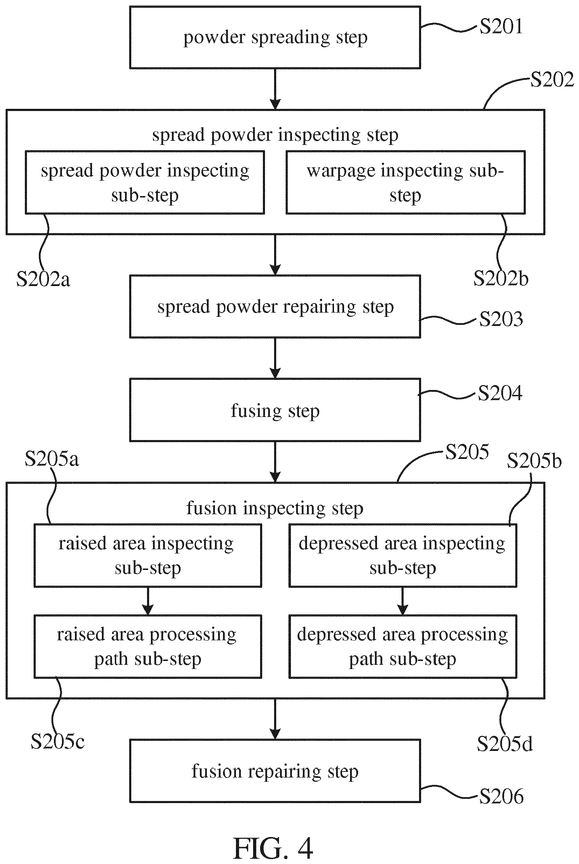

Referring to Fig. 4 with reference to Figs. 1 and 2, a preferred embodiment of an inspecting and repairing method of an additive manufacturing technology of the present disclosure is provided, and inspects and repairs defects of a workpiece 101 formed by the additive manufacturing technology by using said inspecting and repairing device 100 of the additive manufacturing technology. The inspecting and repairing method comprises a powder spreading step S201, a spread powder inspecting step S202, a spread powder repairing step S203, a fusing step S204, a fusion inspecting step S205, and a fusion repairing step S206.

Referring to Fig. 4 with reference to Figs. 1 and 2, in the powder spreading step S201, a powder feeder 24 is configured to feed powders to a powder spreading mechanism 22, and the powder spreading mechanism 22 spreads powders to a powder platform 21.

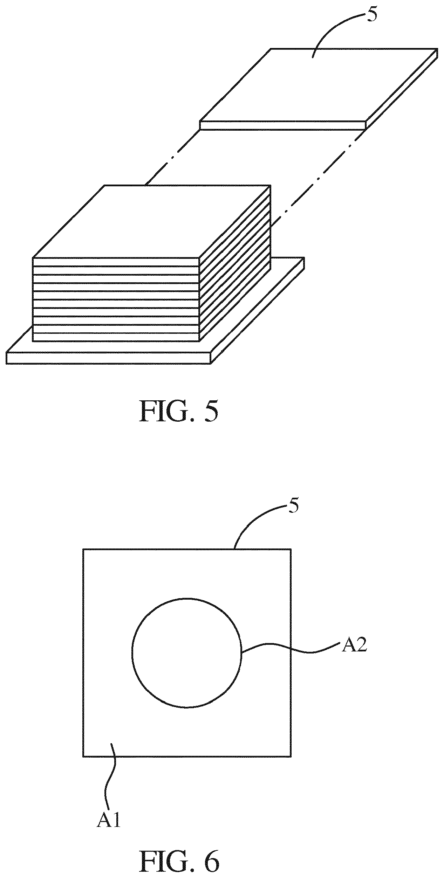

It should be noted that a plurality of image cutting layers 5 are stacked to form a stereoscopic image as shown in Figs. 5 and 6. The workpiece 101 is laminated and formed according the image cutting layers 5, wherein each of the image cutting layers 5 has a layered area A1 and a layered contour area A2.

Referring to Fig. 4 with reference to Figs. 1 and 2, in the spread powder inspecting step S202, a camera 41 is configured to capture a post-fusion image of the powder platform 21, and transmit the post-fusion image to a controller 42 to inspect the post-fusion image. Specifically, the spread powder inspecting step S202 includes a spread powder inspecting sub-step S202a and a warpage inspecting sub-step S202b. The spread powder inspecting sub-step S202a is inspecting a brightness of the layered area A1 of the post-spreading image for obtaining the state of spreading powders on the powder platform 21, a size of the layered area A1 corresponds to a seize of the powder platform 21. In addition, the warpage inspecting sub-step S202b is inspecting a brightness of the layered contour area A2 of the post-spreading image for obtaining warped state, wherein a size of the layered contour area A2 corresponds to a size of a section of the workpiece 101.

Referring to Fig. 4 with reference to Figs. 1 and 2, in the spread powder repairing step S203, the controller 42 determines whether the powder spreading mechanism 22 needs to spread the powders, or whether a powder spreading defect needs to be overcome. For example, state of spreading powders on the powder platform 21 is incomplete, and determined the powder spreading mechanism 22 stops spreading the powders; the workpiece 101 is in a warped state, and determined to overcome the powder spreading defect.

Referring to Fig. 4 with reference to Figs. 1 and 2, in the fusing step S204, a laser unit 23 is configured to melt the powders spread on the powder platform 21 for fusing the powders on the workpiece 101.

Referring to Fig. 4 with reference to Figs. 1 and 2, in the fusion inspecting step S205, the camera 41 is configured to capture a post-fusion image of the powder platform 21 after the fusing step S204, and transmit the post-fusion image to the controller 42 to inspect the post-fusion image, wherein the fusion inspecting step S205 includes a raised area inspecting sub-step S205a, a depressed area inspecting sub-step S205b, a raised area processing path sub-step S205c, and a depressed area processing path sub-step S205d.

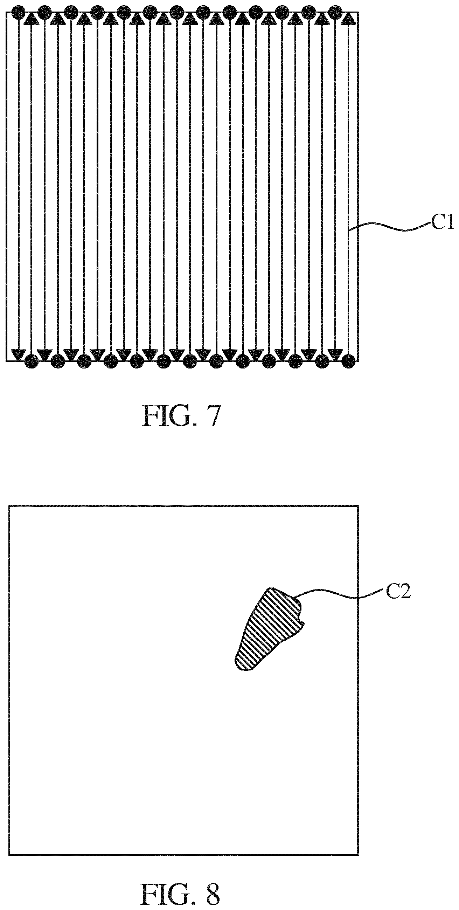

Specifically, the raised area inspecting sub-step S205a is inspecting a raised area of the post-fusion image, and calculating a position and a size of the raised area for obtaining raised state of a surface of the workpiece 101. In the embodiment, a brightness of the raised area is greater than 110% of an average brightness of the layered contour area A2 of the post-fusion image, and the raised area processing path sub-step S205c is implemented after the raised area inspecting sub-step S205a. As shown in Figs. 7 and 8, a raised area processing path is calculated according to a predetermined processing path C1 and a position and a size of a processing area C2 (raised area).

Furthermore, the depressed area inspecting sub-step S205b is inspecting a depressed area of the post-fusion image, and calculating a position and a size of the depressed area for obtaining depressed state of the surface of the workpiece 101, wherein a brightness of the depressed area is less than 90% of an average brightness of the layered contour area A2 of the post-fusion image, and the depressed area processing path sub-step S205d is implemented after the depressed area inspecting sub-step S205b. As shown in Figs. 7 and 8, a depressed area processing path is calculated according to a predetermined processing path C1 and a position and a size of a processing area C2 (depressed area).

Referring to Fig. 3, a laser contour sensor 43 is also configured to sense a contour of the powder platform 21, calculate the position and the size of the raised area, and calculate the position and the size of the depressed area, wherein a height of the raised area is greater than a thickness of two layer of spread powders, and a depth of the depressed area is greater than a thickness of two layer of spread powders.

Referring to Fig. 3 with reference to Figs. 1 and 2, in the fusion repairing step S206, the controller 42 is configured to determine whether a processing mechanism 32 needs to be driven to repair the surface of the workpiece 101 according to an inspection result of the post-fusion image, such as a raised state or a depressed state of the surface of the workpiece 101. In the embodiment, in the fusion repairing step S206, cutting tools 321 of the processing mechanism 32 are configured to ream the surface of the workpiece 101, and a laser cladding device 322 of the processing mechanism 32 is configured to clad the surface of the workpiece 101.

As described above, the post-spreading image and the post-fusion image are captured by the camera 41. The controller 42 inspects the post-spreading image and the post-fusion image, determines whether any type of defects exists, and identifies various types of defects. For example, the state of spreading powders is incomplete, a warped state, a raised state, and a depressed state. Finally, the controller 42 determines whether the powder spreading mechanism 22 needs to spread the powders, whether the powder spreading defect needs to be overcome, or whether the processing mechanism 32 needs to be driven to repair the surface of the workpiece 101. Thus, the yield rate of the workpiece 101 can be increased, the processing time can be reduced, and the quality of the workpiece 101 can be improved.

The present disclosure has been described with preferred embodiments thereof and it is understood that many changes and modifications to the described embodiments can be carried out without departing from the scope of the appended claims.

## Claims

1. An inspecting and repairing method of an additive manufacturing technology for inspecting and repairing a workpiece (101) formed by the additive manufacturing technology, **characterized in that** the inspecting and repairing method comprises:
a powder spreading step (S201) of spreading powders on a powder platform (21) by a powder spreading mechanism (22);
a fusing step (S204) of fusing the powders spread on the powder platform (21) by a laser unit (23);
a fusion inspecting step (S205) of capturing a post-fusion image of the powder platform (21) by a camera (41) after the fusing step (S204), and
transmitting the post-fusion image to a controller (42) to inspect the post-fusion image, wherein the fusion inspecting step (S205) comprises:
a raised area inspecting sub-step (S205a) of inspecting a raised area of the post-fusion image, and calculating a position and a size of the raised area, wherein a brightness of the raised area is greater than 110% of an average brightness of a layered contour area of the post-fusion image; and
a depressed area inspecting sub-step (S205b) of inspecting a depressed area of the post-fusion image, and calculating a position and a size of the depressed area, wherein a brightness of the depressed area is less than 90% of an average brightness of a
layered contour area of the post-fusion image; and
a fusion repairing step (S206) of determining whether a processing mechanism (32) needs to be driven to repair a surface of the workpiece (101) according to an inspection result of the post-fusion image by the controller (42), wherein the processing mechanism (32) includes cutting tools (321) and a laser cladding device (322), the cutting tools (321) and
the laser cladding device (322) are alternatively assembled on a multi-axis parallel connection machine (312).

2. The inspecting and repairing method according to claim 1, **characterized in that** after the raised area inspecting sub-step (S205a), the fusion inspecting step (S205) further comprises a raised area processing path sub-step (S205c) of calculating a raised area processing path according to a predetermined processing path and the position and the size of the raised area.

3. The inspecting and repairing method according to claim 2, **characterized in that** the surface of the workpiece (101) is processed according to the raised area processing path by cutting tools (321) of the processing mechanism (32) in the fusion repairing step (S206).

4. The inspecting and repairing method according to claim 1, **characterized in that** after the depressed area inspecting sub-step (S205b), the fusion inspecting step (S205) further comprises a depressed area processing path sub-step (S205d) of calculating a depressed area processing path according to a predetermined processing path and the position and the size of the depressed area.

5. The inspecting and repairing method according to claim 4, **characterized in that** the surface of the workpiece (101) is reamed according to the depressed area processing path by cutting tools (321) of the processing mechanism (32), and cladded by the laser cladding device (322) of the processing mechanism (32) in the fusion repairing step (S206).

6. The inspecting and repairing method according to claim 1, **characterized in that** the inspecting and repairing method further comprises a spread powder inspecting step (S202) of capturing a post-spreading image of the powder platform (21) after the powder spreading step (S201), and transmitting the post-spreading image to the controller (42) to inspect the post-spreading image.

7. The inspecting and repairing method according to claim 6, **characterized in that** the spread powder inspecting step (S202) comprises:
a spread powder inspecting sub-step (S202a) of inspecting a brightness of a layered area of the post-spreading image; and
a warpage inspecting sub-step (S202b) of inspecting a brightness of a layered contour area of the post-spreading image.

8. The inspecting and repairing method according to claim 6, **characterized in that** the spread powders are determined to be incomplete if a non-powder spreading area of the post-spreading image is greater than 30% of the layered area in the spread powder inspecting sub-step (S202a).

9. The inspecting and repairing method according to claim 6, **characterized in that** the workpiece is determined to be warped if a warpage area of the post-spreading image is greater than 10% of the layered contour area in the warpage inspecting sub-step (S202b).

10. The inspecting and repairing method according to claim 6, **characterized in that** after the spread powder inspecting step (S202), the inspecting and repairing method further comprises a spread powder repairing step (S203) of determining whether the powder spreading mechanism (22) spreads powders or whether a powder spreading defect needs to be overcome according to an inspection result of the post-spreading image by the controller (42).

## Patentansprüche

1. Inspektions- und Reparaturverfahren einer additiven Fertigungstechnologie zum Inspizieren und Reparieren eines durch die additive Fertigungstechnologie gebildeten Werkstücks (101), **dadurch gekennzeichnet, dass** das Inspektions- und Reparaturverfahren umfasst:
einen Pulververteilungsschritt (S201) zum Verteilen von Pulvern auf einer Pulverplattform (21) durch einen Pulververteilungsmechanismus (22);
einen Schmelzschritt (S204) zum Schmelzen der auf der Pulverplattform verteilten Pulver (21) durch eine Lasereinheit (23);
einen Schmelzinspektionsschritt (S205) zum Erfassen eines Nachschmelzbildes der Pulverplattform (21) durch eine Kamera (41) nach dem Schmelzschritt (S204) und des Übertragens des Nachschmelzbildes zu einer Steuerung (42), um das Nachschmelzbild zu inspizieren, wobei der Schmelzinspektionsschritt (S205) umfasst:
einen Inspektionsunterschritt für den erhöhten Bereich (205a) zum Untersuchen eines erhöhten Bereichs des Nachschmelzbildes und zum Berechnen einer Position und einer Größe des erhöhten Bereichs, wobei eine Helligkeit des erhöhten Bereichs größer als 110% einer durchschnittlichen Helligkeit eines geschichteten Konturbereichs des Nachschmelzbildes ist; und
einen Inspektionsunterschritt für den vertieften Bereich (S205b) zum Untersuchen eines vertieften Bereichs des Nachschmelzbildes und zum Berechnen einer Position und einer Größe des vertieften Bereichs, wobei eine Helligkeit des vertieften Bereichs weniger als 90% einer durchschnittlichen Helligkeit eines geschichteten Konturbereichs des Nachschmelzbildes ist; und
einen Schmelzreparaturschritt (S206) zum Bestimmen, ob ein Verarbeitungsmechanismus (32) angetrieben werden muss, um eine Oberfläche des Werkstücks (101) gemäß einem Inspektionsergebnis des Nachschmelzbildes durch die Steuerung (42) zu reparieren, wobei der Verarbeitungsmechanismus (32) Schneidwerkzeuge (321) und eine Laserauftragsschweißvorrichtung (322) beinhaltet, wobei die Schneidwerkzeuge (321) und die Laserauftragsschweißvorrichtung (322) alternativ auf einer mehrachsigen Parallelverbindungsmaschine (312) montiert werden.

2. Inspektions- und Reparaturverfahren nach Anspruch 1, **dadurch gekennzeichnet, dass** nach dem Inspektionsunterschritt für den erhöhten Bereich (205a) der Schmelzinspektionsschritt (S205) weiter einen Unterschritt für den Verarbeitungspfad für den erhöhten Bereich (205c) zum Berechnen eines Verarbeitungspfads für den erhöhten Bereich gemäß einem vorgegebenen Verarbeitungspfad und der Position und der Größe des erhöhten Bereichs umfasst.

3. Inspektions- und Reparaturverfahren nach Anspruch 2, **dadurch gekennzeichnet, dass** die Oberfläche des Werkstücks (101) gemäß dem Verarbeitungspfad für den erhöhten Bereich durch Schneidwerkzeuge (321) des Verarbeitungsmechanismus (32) im Schmelzreparaturschritt (S206) verarbeitet wird.

4. Inspektions- und Reparaturverfahren nach Anspruch 1, **dadurch gekennzeichnet, dass** nach dem Inspektionsunterschritt für den vertieften Bereich (S205b) der Schmelzinspektionsschritt (S205) weiter einen Unterschritt für den Verarbeitungspfad für den vertieften Bereich (S205d) zur Berechnung eines Verarbeitungspfads für den vertieften Bereich gemäß einem vorbestimmten Verarbeitungspfad und der Position und der Größe des vertieften Bereichs umfasst.

5. Inspektions- und Reparaturverfahren nach Anspruch 4, **dadurch gekennzeichnet, dass** die Oberfläche des Werkstücks (101) gemäß dem Verarbeitungspfad für den vertieften Bereich durch Schneidwerkzeuge (321) des Verarbeitungsmechanismus (32) gefräst und durch die Laserauftragsschweißvorrichtung (322) des Verarbeitungsmechanismus (32) im Schmelzreparaturschritt (S206) aufgetragen wird.

6. Inspektions- und Reparaturverfahren nach Anspruch 1, **dadurch gekennzeichnet, dass** das Inspektions- und Reparaturverfahren weiter einen Inspektionsschritt für das verteilte Pulver (S202) umfasst, bei dem ein Nachverteilungsbild der Pulverplattform (21) nach dem Pulververteilungsschritt (S201) aufgenommen wird und das Nachverteilungsbild an die Steuerung (42) übertragen wird, um das Nachverteilungsbild zu inspizieren.

7. Inspektions- und Reparaturverfahren nach Anspruch 6, **dadurch gekennzeichnet, dass** der Inspektionsschritt für das verteilte Pulver (S202) Folgendes umfasst:
einen Inspektionsunterschritt für das verteilte Pulver (S202a) zum Inspizieren einer Helligkeit eines geschichteten Bereichs des Nachverteilungsbildes; und
einen Inspektionsunterschritt für die Verformung (S202b), um einer Helligkeit eines geschichteten Konturbereichs des Nachverteilungsbildes zu inspizieren.

8. Inspektions- und Reparaturverfahren nach Anspruch 6, **dadurch gekennzeichnet, dass** die verteilten Pulver als unvollständig bestimmt werden, wenn ein nicht mit Pulver verteilter Bereich des Nachverteilungsbildes größer als 30% des geschichteten Bereichs im Inspektionsunterschritt für das verteilte Pulver (S202a) ist.

9. Inspektions- und Reparaturverfahren nach Anspruch 6, **dadurch gekennzeichnet, dass** das Werkstück als verformt bestimmt wird, wenn eine Verformungsfläche des Nachverteilungsbildes größer als 10% der geschichteten Konturfläche im Inspektionsunterschritt für die Verformung (S202b) ist.

10. Inspektions- und Reparaturverfahren nach Anspruch 6, **dadurch gekennzeichnet, dass** das Inspektions- und Reparaturverfahren nach dem Inspektionsschritt für das verteilte Pulver (S202) weiter einen Reparaturschritt für das verteilte Pulver (S203) umfasst, bei dem gemäß einem Inspektionsergebnis des Nachverteilungsbildes durch die Steuerung (42) bestimmt wird, ob der Pulververteilungsmechanismus (22) Pulver verteilt oder ob ein Pulververteilungsfehler behoben werden muss.

## Revendications

1. Procédé d'inspection et de réparation d'une technologie de fabrication additive pour l'inspection et la réparation d'une pièce de travail (101) formée par la technologie de fabrication additive, **caractérisé en ce que** le procédé d'inspection et de réparation comprend :
une étape d'étalement de poudre (S201) consistant à étaler des poudres sur une plateforme de poudre (21) par un mécanisme d'étalement de poudre (22) ;
une étape de fusion (S204) consistant à faire fondre les poudres étalées sur la plateforme de poudre (21) par une unité laser (23) ;
une étape d'inspection de fusion (S205) consistant à capturer une image post-fusion de la plateforme de poudre (21) par une caméra (41) après l'étape de fusion (S204), et transmettre l'image post-fusion à un dispositif de commande (42) pour inspecter l'image post-fusion, dans lequel l'étape d'inspection de fusion (S205) comprend :
une sous-étape d'inspection de zone relevée (S205a) consistant à inspecter une zone relevée de l'image post-fusion, et calculer une position et une taille de la zone relevée, dans lequel une luminosité de la zone relevée est supérieure à 110% d'une luminosité moyenne d'une zone de contour en couche de l'image post-fusion ; et
une sous-étape d'inspection de zone enfoncée (S205b) consistant à inspecter une zone enfoncée de l'image post-fusion, et calculer une position et une taille de la zone enfoncée, dans lequel une luminosité de la zone enfoncée est inférieure à 90% d'une luminosité moyenne d'une zone de contour en couche de l'image post-fusion ; et
une étape de réparation de fusion (S206) consistant à déterminer si un mécanisme de traitement (32) nécessite d'être entraîné pour réparer une surface de la pièce de travail (101) selon un résultat d'inspection de l'image post-fusion par le dispositif de commande (42), dans lequel le mécanisme de traitement (32) comporte des outils de coupe (321) et un dispositif de revêtement au laser (322), les outils de coupe (321) et le dispositif de revêtement au laser (322) sont assemblés en alternance sur la machine de connexion parallèle multiaxe (312).

2. Procédé d'inspection et de réparation selon la revendication 1, **caractérisé en ce qu'**après la sous-étape d'inspection de zone relevée (S205a), l'étape d'inspection de fusion (S205) comprend en outre une sous-étape de trajet de traitement de zone relevée (S205c) consistant à calculer un trajet de traitement de zone relevée selon un trajet de traitement prédéterminé et la position et la taille de la zone relevée.

3. Procédé d'inspection et de réparation selon la revendication 2, **caractérisé en ce que** la surface de la pièce de travail (101) est traitée selon le trajet de traitement de zone relevée par des outils de coupe (321) du mécanisme de traitement (32) dans l'étape de réparation de fusion (S206).

4. Procédé d'inspection et de réparation selon la revendication 1, **caractérisé en ce qu'**après la sous-étape d'inspection de zone enfoncée (S205b), l'étape d'inspection de fusion (S205) comprend en outre une sous-étape de trajet de traitement de zone enfoncée (S205d) consistant à calculer un trajet de traitement de zone enfoncée selon un trajet de traitement prédéterminé et la position et la taille de la zone enfoncée.

5. Procédé d'inspection et de réparation selon la revendication 4, **caractérisé en ce que** la surface de la pièce de travail (101) est alésée selon le trajet de traitement de zone enfoncée par des outils de coupe (321) du mécanisme de traitement (32), et revêtue par le dispositif de revêtement au laser (322) du mécanisme de traitement (32) dans l'étape de réparation de fusion (S206).

6. Procédé d'inspection et de réparation selon la revendication 1, **caractérisé en ce que** le procédé d'inspection et de réparation comprend en outre une étape d'inspection de poudre étalée (S202) consistant à capturer une image post-étalement de la plateforme de poudre (21) après l'étape d'étalement de poudre (S201), et transmettre l'image post-étalement au dispositif de commande (42) pour inspecter l'image post-étalement.

7. Procédé d'inspection et de réparation selon la revendication 6, **caractérisé en ce que** l'étape d'inspection de poudre étalée (S202) comprend :
une sous-étape d'inspection de poudre étalée (S202a) consistant à inspecter une luminosité d'une zone en couche de l'image post-étalement ; et
une sous-étape d'inspection de gauchissement (S202b) consistant à inspecter une luminosité d'une zone de contour en couche de l'image post-étalement.

8. Procédé d'inspection et de réparation selon la revendication 6, **caractérisé en ce que** les poudres étalées sont déterminées comme étant incomplètes si une zone de non-étalement de poudre de l'image post-étalement est supérieure à 30% de la zone en couche dans la sous-étape d'inspection de poudre étalée (S202a).

9. Procédé d'inspection et de réparation selon la revendication 6, **caractérisé en ce que** la pièce de travail est déterminée comme étant gauchie si une zone de gauchissement de l'image post-étalement est supérieure à 10% de la zone de contour en couche dans la sous-étape d'inspection de gauchissement (S202b).

10. Procédé d'inspection et de réparation selon la revendication 6, **caractérisé en ce qu'**après l'étape d'inspection de poudre étalée (S202), le procédé d'inspection et de réparation comprend en outre une étape de réparation de poudre étalée (S203) consistant à déterminer si le mécanisme d'étalement de poudre (22) étale des poudres ou si un défaut d'étalement de poudre nécessite d'être éliminé selon un résultat d'inspection de l'image post-étalement par le dispositif de commande (42).
